# EUROPÄISCHE PATENTSCHRIFT

(11) **EP 3 727 994 B1**
(45) Veröffentlichungstag und Bekanntmachung des Hinweises auf die Patenterteilung: **23.03.2022**
(21) Anmeldenummer: 18829771.7
(22) Anmeldetag: 13.12.2018
(51) Int. Cl.: B62D 1/181, B62D 1/19

(54) **MOTORISCH VERSTELLBARE LENKSÄULE FÜR EIN KRAFTFAHRZEUG**
MOTOR-ADJUSTABLE STEERING COLUMN FOR A MOTOR VEHICLE
COLONNE DE DIRECTION À RÉGLAGE MOTORISÉ POUR VÉHICULE À MOTEUR

(30) Priorität: 20.12.2017 DE 102017223469
(43) Veröffentlichungstag der Anmeldung: 28.10.2020
(73) Patentinhaber: thyssenkrupp Presta AG, 9492 Eschen (LI); thyssenkrupp AG, 45143 Essen (DE)
(72) Erfinder: MUNDING, Christoph, 9492 Eschen (LI); SCHNITZER, Hieronymus, 9487 Gamprin (LI)
(74) Vertreter: thyssenkrupp Intellectual Property GmbH
(86) Internationale Anmeldenummer: PCT/EP2018/084785
(87) Internationale Veröffentlichungsnummer: WO 2019/121330

(56) Entgegenhaltungen:
- DE-B3- 10 259 596
- US-A- 5 737 971

## Beschreibung

### Stand der Technik

Die Erfindung betrifft eine motorisch verstellbare Lenksäule für ein Kraftfahrzeug, umfassend einen Außenmantel, der von einer an einer Fahrzeugkarosserie anbringbaren Trageinheit gehalten ist und in dem in Längsrichtung teleskopierend verstellbar eine Stelleinheit aufgenommen ist, in der eine Lenkspindel koaxial in einem Mantelrohr um eine Längsachse drehbar gelagert ist, wobei zwischen Außenmantel und Stelleinheit ein Verstellantrieb angeordnet ist, der eine zumindest teilweise innerhalb der Stelleinheit angeordnete Gewindespindel aufweist, die von einem elektrischen Stellmotor drehend antreibbar in eine Spindelmutter eingreift, wobei die Gewindespindel mit Abstand zur Längsachse angeordnet ist, und wobei die Stelleinheit eine die Lenkspindel aufnehmende Öffnung aufweist, und die Gewindespindel in einem von der Öffnung separat ausgebildeten Spindeltunnel angeordnet ist, dadurch gekennzeichnet, dass die Öffnung und der Spindeltunnel in dem Mantelrohr der Stelleinheit ausgebildet sind.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung von Lenkbefehlen angebracht ist. Die Lenkspindel ist in der Stelleinheit in einem inneren Mantelrohr, auch kurz Mantelrohr oder Innenmantel genannt, um ihre Längsachse drehbar gelagert. Die Stelleinheit ist in einem Außenmantel, auch als Manteleinheit, Kastenschwinge oder Führungskasten bezeichnet, aufgenommen, der über eine Trageinheit an der Fahrzeugkarosserie gehalten wird. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Eine Längenverstellung kann dadurch realisiert werden, dass die Stelleinheit in dem Außenmantel in Längsrichtung, dies entspricht der Richtung der Längsachse, teleskopartig verschiebbar aufgenommen ist, wie im Stand der Technik beispielsweise in der DE 10 2017 207 561 A1 oder der DE 10 2015 224 602 A1 beschrieben. Darin ist zur Ausführung der Verstellbewegung der Stelleinheit relativ zum Außenmantel ein linearer motorischer Verstellantrieb vorgesehen, der als Spindeltrieb ausgebildet ist mit einer in eine Spindelmutter eingeschraubten Gewindespindel, die von einem Elektromotor relativ zur Spindelmutter drehend antreibbar ist. Die Gewindespindel und die Spindelmutter stützen sich in Längsrichtung zwischen der Stelleinheit und dem Außenmantel ab, so dass je nach relativer Drehrichtung die Stelleinheit relativ zum Außenmantel teleskopierend ein- oder ausgefahren wird.

Eine Höhenverstellung kann optional dadurch realisiert werden, dass die Stelleinheit oder der Außenmantel schwenkbar an der Trageinheit gelagert ist, und gegebenenfalls ebenfalls mittels eines elektrischen Verstellantriebs verstellbar ist.

Motorisch verstellbare Lenksäulen bieten eine Erhöhung des Fahr- und Bedienkomforts, indem beispielsweise für verschiedene Fahrer individuelle Lenkradpositionen elektronisch gespeichert und bei Bedarf automatisch abgerufen und eingestellt werden können. Von besonderem Interesse ist es weiterhin, dass die Lenksäule in bestimmten Betriebssituationen automatisiert in vorgegebene Positionen verstellt werden kann. Beispielsweise ist beim auto-nomen Fahren während der Fahrt kein manueller Lenkeingriff durch den Fahrer erforderlich, so dass das Lenkrad prinzipiell außerhalb der Bedienposition in eine Verstauposition gebracht werden kann, um den dadurch freiwerdenden Fahrzeuginnenraum alternativ nutzen zu können.

Die DE 10 2017 207 561 A1 zeigt beispielhaft eine in vielfältigen Varianten bekannte Ausführung, bei welcher der Spindeltrieb außen neben dem Außenmantel angebracht ist. Diese gilt als erprobt und zuverlässig, erfordert jedoch relativ viel Bauraum im Kraftfahrzeug, und die Gewindespindel liegt nach außen ungeschützt frei.

Aus der DE 10 2015 224 602 A1 ist eine Möglichkeit bekannt, die Gewindespindel des Spindeltriebs koaxial auf der Längsachse anzuordnen. Dadurch kann die Gewindespindel zwar geschützt innerhalb der Stelleinheit im Mantelrohr untergebracht werden. Eine derartige Anordnung ist jedoch nur in speziellen Bauformen einer steer-by-wire-Lenkeinrichtung ohne mechanisch durchgehende Lenkwelle umsetzbar, bei welcher die Lenkspindel im lenkradseitigen Bereich der Stelleinheit endet, und insbesondere nicht durch die Lenksäule in Längsrichtung hindurchgeht, d.h. die Lenkspindel nicht aus dem vom lenkradseitigen Ende abgewandten, lenkgetriebeseitigen Ende nach vorn aus dem Außenmantel austritt, wo sie über die Lenkwelle an ein Lenkgetriebe angeschlossen wird. Für mechanisch mit dem Lenkgetriebe gekuppelte Lenksäulen ist die koaxiale Anordnung der Gewindespindel nicht geeignet.

Aus der DE 102 59 596 B3 ist eine Lenksäule der eingangs genannten Art bekannt. Darin sind das die Öffnung für die Lenkspindel aufweisende Mantelrohr und der Spindeltunnel als separate Bauteile ausgebildet, so dass ein nachteilig großer Bauraum beansprucht wird. Angesichts der vorangehend erläuterten Problematik ist es eine Aufgabe der vorliegenden Erfindung, eine universell einsetzbare motorisch verstellbare Lenksäule anzugeben, die einen kompakten Verstellantrieb aufweist.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen. Erfindungsgemäß ist bei einer motorisch verstellbaren Lenksäule für ein Kraftfahrzeug, umfassend einen Außenmantel, der von einer an einer Fahrzeugkarosserie anbringbaren Trageinheit gehalten ist und in dem in Längsrichtung teleskopierend verstellbar eine Stelleinheit aufgenommen ist, in der eine Lenkspindel koaxial in einem Mantelrohr um eine Längsachse drehbar gelagert ist, wobei zwischen Außenmantel und Stelleinheit ein Verstellantrieb angeordnet ist, der eine zumindest teilweise innerhalb der Stelleinheit angeordnete Gewindespindel aufweist, die von einem elektrischen Stellmotor drehend antreibbar in eine Spindelmutter eingreift, wobei die Gewindespindel mit Abstand zur Längsachse angeordnet ist, und wobei die Stelleinheit eine die Lenkspindel aufnehmende Öffnung aufweist, und die Gewindespindel in einem von der Öffnung separat ausgebildeten Spindeltunnel angeordnet ist, vorgesehen, dass die Öffnung und der Spindeltunnel in dem Mantelrohr der Stelleinheit ausgebildet sind.

Die Stelleinheit weist eine die Lenkspindel aufnehmende Öffnung auf, und die Gewindespindel ist in einem von der Öffnung separat ausgebildeten Spindeltunnel angeordnet. Die Öffnung kann dem in Längsrichtung offenen Querschnitt des Mantelrohrs der Stelleinheit entsprechend ausgebildet sein, in dem die Lenkspindel koaxial drehbar gelagert ist, wie dies im Prinzip aus dem Stand der Technik bekannt ist, wobei die Längsachse, d.h. die Drehachse der Lenkspindel zusammenfällt mit der zentralen Öffnungsachse. Die Öffnung kann einen kreisrunden Querschnitt haben, oder auch mehreckig, regelmäßig oder unregelmäßig ausgestaltet sein, beispielsweise vier-, sechs- oder achteckig. Der Spindeltunnel bildet eine zweite Öffnung, die mit Abstand - vorzugsweise parallel - zu der vorgenannten Öffnung bzw. der Längsachse ausgerichtet ist. Bezüglich der Längsachse ist der Spindeltunnel derart mit radialem Abstand ausgebildet, dass die Gewindespindel darin achsfern, bevorzugt achsparallel zur Längsachse aufnehmbar ist. Der Spindeltunnelquerschnitt kann ebenfalls kreisrund, polygonal, mehrkantig oder mehreckig geformt sein, wobei die Spindelachse entlang einer Tunnelachse ausgerichtet sein kann.

Erfindungsgemäß sind die Öffnung und der Spindeltunnel in dem Mantelrohr der Stelleinheit ausgebildet. Dadurch kann das Mantelrohr ein kompaktes und formstabiles Bauteil bilden, welches eine raumsparende, kompakte Konstruktion der Stelleinheit und damit der gesamten Lenksäule ermöglicht.

Der als Spindeltrieb ausgebildete motorische Verstellantrieb greift an dem Außenmantel und der Stelleinheit an, wie dies für die Funktionalität der Längsverstellung an sich bekannt ist. Der Verstellantrieb ist entsprechend wirkmäßig im Kraftfluss zwischen dem Außenmantel und der Stelleinheit angeordnet. Zur Längsverstellung kann die Stelleinheit in Richtung der Längsachse teleskopierend aus dem Außenmantel herausgefahren oder in diesen eingefahren werden. Dadurch, dass sie zumindest teilweise innerhalb der Stelleinheit angeordnet ist, ist die Gewindespindel insbesondere auch dann gegen Umwelteinflüsse geschützt, wenn die Stelleinheit maximal nach hinten, in Richtung auf die Fahrerposition zu aus dem Außenmantel ausgefahren ist, wobei die Stelleinheit teilweise nach außen freiliegt.

Die Spindelachse der Gewindespindel hat erfindungsgemäß radialen Abstand von der Längsachse, und liegt somit exzentrisch bezüglich der Längsachse. Daraus resultiert der besondere Vorteil der Erfindung, dass der zentrale, koaxiale Durchgang durch die Lenksäule für die mechanische Durchführung der zentrisch angeordneten Lenkspindel bzw. Lenkwelle zum Lenkgetriebe oder zu einem Handkraftsteller (Feedback-Aktuator) frei bleibt. Dadurch kann ein zuverlässig geschützter, kompakt aufgebauter Spindeltrieb erstmals sowohl bei einer konventionellen, mechanisch gekuppelten Lenksäule mit in Längsrichtung koaxial durchgehender Lenkwelle, als auch bei einer elektrisch gekuppelten Steer-by-Wire-Lenksäule realisiert werden.

Die Gewindespindel ist bevorzugt in dem Bereich, der sich abhängig vom Verstellzustand, d.h. der jeweiligen Längeneinstellung der Lenksäule, nicht oder nur teilweise innerhalb der Stelleinheit befindet, von dem Außenmantel umschlossen, und dadurch auch in maximal ausgefahrenem Zustand nach außen geschützt. Mit anderen Worten kann die Gewindespindel unabhängig von der Verstellung der Lenksäule zumindest teilweise, bevorzugt über ihre gesamte Länge im Inneren der aus der Stelleinheit und dem Außenmantel gebildeten Teleskopanordnung geschützt angeordnet sein. Hierzu können der Außenmantel und das Mantelrohr der Stelleinheit bevorzugt als umfangsseitig geschlossene Hohlprofile ausgebildet sein, welche die Gewindespindel umfangsseitig umschließen.

Dadurch, dass der Spindeltrieb innen an der Stelleinheit und dem Außenmantel angreift, kann eine kompakte Bauform mit glatten Außenflächen ohne nach außen vorstehende Abstützungen realisiert werden.

Das Mantelrohr kann als Gussteil ausgebildet sein, beispielsweise aus Aluminium, Magnesium oder anderen Metalllegierungen. Die Fertigung kann rationell als Stranggussprofil erfolgen, bei dem ein endloses Hohlprofil mit einem durchgehend gleichen Querschnitt erzeugt wird, von dem das Mantelrohr in der geforderten Länge abgelängt wird. Alternativ kann das Mantelrohr als Blechformteil gefertigt sein.

Es kann vorgesehen sein, dass die Gewindespindel an dem Außenmantel in Längsrichtung abgestützt ist, und die Spindelmutter in Längsrichtung abgestützt drehfest an der Stelleinheit angebracht ist. Von einer Antriebseinheit können mittels eines elektrischen Motors, und eines gegebenenfalls zwischengeschalteten Getriebes, beispielsweise eines Schneckengetriebes, die Gewindespindel und die Spindelmutter bezüglich der Spindelachse relativ zueinander rotatorisch angetrieben werden, so dass je nach Drehrichtung die Gewindespindel und die Spindelmutter in Richtung der Spindelachse translatorisch aufeinander zu oder voneinander weg bewegt werden und entsprechend die Stelleinheit relativ zum Außenmantel ein- oder ausgefahren wird.

Der Spindelantrieb kann als Rotationsspindelantrieb ausgestaltet sein, bei dem die Antriebseinheit feststehend mit dem Außenmantel verbunden ist, und zur Verstellung die Gewindespindel bezüglich der mit der Stelleinheit drehfest verbundenen Spindelmutter drehend antreibt. Die Spindelmutter kann raumsparend und geschützt innerhalb des Mantelrohrs der Stelleinheit angebracht oder ausgebildet sein. Beim Einfahren der Stelleinheit in den Außenmantel wird die Gewindespindel in die Spindelmutter eingeschraubt und taucht dabei in die translatorisch in den Außenmantel teleskopierende Stelleinheit ein. Ein Vorteil des Rotationsspindelantriebs mit an der Stelleinheit befestigter Spindelmutter ist, dass die beim Verstellen bewegte Masse der Stelleinheit durch die Spindelmutter nicht oder nur geringfügig erhöht wird, wodurch eine hohe Verstellbeschleunigung mit relativ geringer Antriebsleistung erreicht werden kann.

In einer alternativen Bauform des Spindelantriebs, der als Tauchspindelantrieb bezeichnet wird, ist die Gewindespindel drehfest, aber in Richtung der Spindelachse bzw. der Längsachse feststehend an der Stelleinheit fixiert, und die in Längsrichtung fixierte Spindelmutter ist von der Antriebseinheit drehend antreibbar. Auf diese Weise kann ebenfalls eine translatorische Bewegung zum Verstellen vom Außenmantel und Stelleinheit relativ zueinander realisiert werden.

Es ist vorteilhaft, dass die Antriebseinheit mit dem Außenmantel verbunden ist. Dadurch kann die beim Verstellen bewegte Masse der Stelleinheit gering gehalten werden, mit den vorangehend beschriebenen Vorteilen. Es ist jedoch auch denkbar, die Antriebseinheit an der Stelleinheit zu fixieren, und die Spindelmutter am Außenmantel abzustützen, beispielsweise zur Anpassung an einen zur Verfügung stehenden Bauraum im Kraftfahrzeug.

Vorzugsweise ist die Gewindespindel parallel zur Längsachse angeordnet. Die Gewindespindelachse, oder kurz Spindelachse, und die Längsachse verlaufen dann parallel zueinander. Dadurch, dass die Gewindespindel mit relativ geringem radialen Abstand zu der koaxial in dem Mantelrohr der Stelleinheit gelagerten Lenkspindel angeordnet werden kann, wird ein platzsparender, kompakter Aufbau ermöglicht. Darüber hinaus können potentielle Beeinträchtigungen des Spindeltriebs durch Querkräfte oder Biegelasten weitgehend vermieden werden.

Die Öffnung und der Spindeltunnel können jeweils umfangsseitig geschlossen ausgebildet sein. Durch eine geschlossen rohrprofilförmige Ausbildung kann die Gewindespindel von dem Spindeltunnel umfangsseitig vollständig umschlossen und damit optimal gegen Einflüsse von außen geschützt sein. Durch die getrennte Ausbildung der Öffnung und des Spindeltunnels wird weiterhin die Betriebssicherheit im Crashfall dadurch erhöht, dass auch bei den dabei auftretenden, extrem hohen Belastungen die Lenkspindel und/oder die Gewindespindel zwar verformt werden können, aber die Lenkspindel und die Gewindespindel sich in ihrer jeweiligen Funktion nicht mechanisch beeinträchtigen können.

Es ist vorteilhaft, dass das Mantelrohr einstückig ausgebildet ist, dergestalt, dass die Öffnung, in der die Lenkspindel angeordnet ist, und der Spindeltunnel in dem einstückigen Mantelrohr ausgebildet sind. Der Querschnitt des Mantelrohrs kann dann eine im Wesentlichen "8"-förmige Grundform haben, wobei in der einen Öffnung die Lenkspindel gelagert ist, und in der anderen die Gewindespindel.

Es kann vorgesehen sein, dass zwei kreiszylindrische Rohre, bevorzugt mit unterschiedlichen Durchmessern, in der Länge miteinander verschweißt werden. Die Rohre berühren sich an ihren äußeren Mantelflächen, so dass diese konvex-konvex aneinander liegen, und somit auf einfache Weise eine Kehlnaht zwischen den Rohren gesetzt werden kann. Das eine Rohr bildet den Spindeltunnel und das andere Rohr bildet die Öffnung zur Aufnahme der Lenkwelle.

Besonders bevorzugt ist das Mantelrohr als ein einstückig integrales Bauteil ausgebildet. Ein derartiges einstückiges Mantelrohr kann beispielsweise als Strangpressprofil mit über die Länge durchgehendem Profilquerschnitt ausgebildet sein, beispielsweise aus Aluminium- oder Magnesiumlegierungen. Strangpressprofile können rationell in vielfältigen Querschnittsformen konstruiert und maßhaltig und kostengünstig produziert werden. Ein weiterer Vorteil ist, dass von einem Rohling eines Strangpressprofils mit einer mehrfachen Länge des Mantelrohrs je nach Ausführung der Lenksäule ein Abschnitt in Länge des Mantelrohrs abgelängt werden kann. Dadurch kann die Fertigung unterschiedlicher Typen von Lenksäulen mit im Querschnitt gleichen, aber unterschiedlich langen Stelleinheiten rationeller erfolgen. Alternativ ist es ebenfalls denkbar und möglich, dass Mantelrohr als Gussbauteil auszubilden, wobei bevorzugt ein Gusswerkstoff wie eine Aluminium- oder Magnesiumlegierung zum Einsatz kommt.

Alternativ kann das Mantelrohr als Blechformteil gefertigt, bevorzugt aus Stahlblech. Um den Spindeltunnel gegenüber der Öffnung zur Aufnahme der Lenkwelle abzuschließen, so dass im Querschnitt zwei voneinander separate, jeweils umfangsseitig geschlossene Öffnungen gebildet werden, kann der Umfang des Spindeltunnels mittels eines Verschlussteils geschlossen werden. Als Verschlussteil kann beispielsweise ein Deckel innen mit dem Blechformteil eingesetzt und fest verbunden sein, beispielsweise durch Schweißen. Dadurch wird kann ein in Längsrichtung schlitzförmiger Durchgang zwischen dem Spindeltunnel und der Öffnung zur Aufnahme der Lenkwelle geschlossen werden. Dass Verschlussteil kann dabei eine Verstrebung bilden, durch welche die Steifigkeit des Mantelrohrs erhöht wird.

Die Spindelmutter kann in dem Spindeltunnel befestigt sein. Bei dem oben genannten Rotationsspindelantrieb ist die Spindelmutter in Längsrichtung feststehend, bezüglich Drehung um die Spindelachse drehfest an der Stelleinheit festgelegt. Diese Fixierung an der Stelleinheit kann günstigerweise durch Festlegung innerhalb des Spindeltunnels erfolgen. Um eine drehfeste Fixierung zu realisieren, ist es vorteilhaft, dass die Spindelmutter bezüglich einer Rotation um die Spindelachse formschlüssig in den Querschnitt des Spindeltunnels eingreift. Beispielsweise kann die Spindelmutter einen mehreckigen oder mehrkantigen Querschnitt haben, beispielsweise in Form eines symmetrischen oder auch unregelmäßigen Vier-, Fünf-, Sechs- oder Vielkants, wobei der Öffnungsquerschnitt des Spindeltunnels korrespondierend dazu ausgebildet ist, um ein Einsetzen in Längsrichtung zur Montage der Spindelmutter zu ermöglichen. Ohne zusätzliche Befestigungs- oder Halteelemente ist die Spindelmutter dadurch drehfest auf der Spindelachse gehalten. An der geforderten Längsposition der Stelleinheit kann die Spindelmutter innerhalb des Spindeltunnels in Längsrichtung fixiert und abgestützt werden, beispielsweise durch geeignete Befestigungsmittel.

Das Gewinde der Spindelmutter erstreckt sich bevorzugt nur über einen Teilabschnitt der Länge des Spindeltunnels. Der Teilabschnitt kann weniger als 50% der Länge des Spindeltunnels betragen, bevorzugt weniger als 20%.

Die Öffnung, in der die Spindelmutter aufgenommen ist, also mit anderen Worten der Spindeltunnel erstreckt sich zumindest über 50 % der Länge des Mantelrohrs, besonders bevorzugt über 80% der Länge des Mantelrohrs und ganz besonders bevorzugt über die gesamte Länge des Mantelrohrs.

Bevorzugt weist der Außenmantel eine koaxiale Aufnahmeöffnung auf, in der die Stelleinheit teleskopierbar aufgenommen ist. Dabei wird das Mantelrohr, welches eine koaxiale Öffnung für die Lenkspindel und eine die Gewindespindel aufnehmende Öffnung aufweist, beispielsweise in Form eines Spindeltunnels, innerhalb des Außenmantels in Längsrichtung teleskopartig geführt aufgenommen. Dadurch ist der je nach Verstellung nicht in die Stelleinheit eintauchende Abschnitt der Gewindespindel durch den Außenmantel nach außen geschützt.

Der Außenmantel kann ein Strangpressprofil aufweisen. Das Strangpressprofil weist eine lenkradseitig offene Aufnahmeöffnung auf, deren offener Querschnitt das Mantelrohr der Stelleinheit teleskopierbar aufnimmt, bevorzugt bezüglich Drehung um die Längsachse formschlüssig, wodurch eine eindeutige Orientierung und eine hohe Formsteifigkeit erreichbar ist. Die Fertigung durch Ablängen von einem langen Strangpressprofil-Rohling (Halbzeug) hat die vorangehend für das Mantelrohr erläuterten Vorteile.

Bevorzugt ist zwischen dem Außenmantel und der Stelleinheit zumindest eine gleitende oder wälzgelagerte Linearführung ausgebildet ist. Eine Linearführung weist miteinander korrespondierende, einander radial gegenüberliegende, in Längsrichtung langgestreckte Führungsflächen innen im Außenmantel und außen auf dem Mantelrohr auf. Bei einer Verstellung werden die Führungsflächen in Längsrichtung relativ zueinander bewegt. Die Führungsflächen können als Gleitflächen einer linearen Gleitlagerung ausgebildet sein, die spielarm unmittelbar aneinander entlanggleiten können, oder zwischen die ein zusätzlicher Gleitkörper oder eine Gleitschicht eingefügt sein kann, der spielarm an beiden Gleitflächen einer Gleitführung anliegt. Die Gleitflächen können reibungsmindernd ausgestaltet sein, beispielsweise durch Aufbringen reibungsmindernder Mittel, und alternativ oder zusätzlich kann ein Gleitkörper, beispielsweise in Form einer Beschichtung oder einer Gleithülse aus gut gleitfähigen Material, wie beispielsweise Polytetrafluorethylen (PTFE) oder dergleichen, zwischen Außenmantel und Mantelrohr eingesetzt sein. Alternativ kann die Linearführung als lineare Wälzlagerführung ausgebildet sein, wobei zwischen die als Wälzlagerflächen ausgebildeten Führungsflächen in Längsrichtung abrollbare Wälzkörper eingesetzt sind, beispielsweise Rollen, Nadelrollen oder Kugeln. Die genannten Ausführungen der Linearführungen gewährleisten eine leichtgängige und spielarme teleskopierende Verstellung der Stelleinheit relativ zum Außenmantel. Die Führungsflächen können in vorteilhafter Weise in Strangpressprofile eingeformt sein, so dass die Fertigung des Mantelrohrs und/oder des Außenmantels rationell erfolgen kann.

Eine bevorzugte Weiterbildung der Erfindung kann vorsehen, dass zwischen dem Außenmantel und der Stelleinheit eine Energieabsorptionseinrichtung angeordnet ist. Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, kann zwischen dem Außenmantel und der Stelleinheit eine Energieabsorptionseinrichtung eingekoppelt sein, die auch als Crash-System bezeichnet. Wird im Crashfall durch einen auf das Lenkrad auftreffenden Körper eine hohe Kraft in Längsrichtung auf die Lenkspindel ausgeübt, die einen vorgegebenen Grenzwert überschreitet, wird die Stelleinheit nach vorn in den Außenmantel eingeschoben, wobei die durch die relative Bewegung eingeleitete kinetische Energie in der Energieabsorptionseinrichtung eingeleitet in Verformungsarbeit umgesetzt wird, so dass der auf das Lenkrad auftreffende Körper kontrolliert abgebremst wird und die Verletzungsgefahr verringert wird.

Es ist vorteilhaft, dass die Energieabsorptionseinrichtung ein direkt oder mittelbar zwischen der Spindelmutter oder der Gewindespindel und der Stelleinheit angeordnetes Energieabsorptionselement aufweist. Ein Deformationsabschnitt des Energieabsorptionselement wird durch die relative Bewegung zwischen Außenmantel und Stelleinheit in Crashfall unter Absorption kinetischer Energie plastisch deformiert, beispielsweise durch Umbiegen einer Biegelasche, Auftrennen einer Reißlasche, Aufweiten eines Schlitzes oder dergleichen. Derartige und weitere Energieabsorptionselemente sowie Kombinationen davon sind aus dem Stand der Technik prinzipiell bekannt.

Die Energieabsorptionseinrichtung liegt im längs gerichteten Kraftfluss im Crashfall zwischen dem Spindeltrieb und Außenmantel und Mantelrohr der Stelleinheit, so dass die Energie über die Spindel und die Spindelmutter in das Energieabsorptionselement eingeleitet wird. Dadurch, dass das Energieabsorptionselement direkt zwischen der Spindelmutter und dem Mantelrohr der Stelleinheit angeordnet ist, kann es bei dem oben beschriebenen Rotationsspindelantrieb mit Vorteil zusammen mit der Spindelmutter geschützt innerhalb der Stelleinheit angeordnet sein, beispielsweise in dem Spindeltunnel. Dadurch ist die Energieabsorptionseinrichtung gegen potentiell schädliche Einflüsse gesichert, und die Funktionssicherheit wird erhöht. Bei einem Tauchspindelantrieb kann es zwischen der dann rotationsfesten Gewindespindel und der Stelleinheit ebenfalls geschützt in der Stelleinheit untergebracht sein.

Es kann vorgesehen sein, dass zwischen der Spindelmutter oder der Gewindespindel und der Stelleinheit ein Sollbruchelement angeordnet ist. Das Sollbruchelement wird beim Überschreiten einer definierten, hohen Grenzkraft in Längsrichtung zwischen dem Außenmantel und der Stelleinheit getrennt bzw. losgebrochen und gibt dann die relative Bewegung zur Verformung des Energieabsorptionselements frei. Es kann beispielsweise als Scherstift ausgebildet sein. Durch das kontrollierte Losbrechen kann das Ansprechverhalten der Energieabsorption definiert vorgegeben werden, so dass die Energieabsorptionsvorrichtung ausschließlich im Crashfall mechanisch beansprucht wird, wodurch die Funktionssicherheit erhöht wird.

In einer vorteilhaften Weiterbildung kann es vorgesehen sein, dass die Spindelmutter aus einem Kunststoff gebildet ist, beispielsweise aus einem Polyoxymethylen. Somit kann die Spindelmutter auf eine einfache und kostengünstige Art und Weise hergestellt werden. Alternativ kann es auch vorgesehen sein, dass die Spindelmutter aus einem Buntmetall wie Messing gebildet ist. Auch eine Kombination aus Buntmetall und Kunststoff ist denkbar und möglich.

Dank der erfindungsgemäßen exzentrischen Anordnung des Spindeltriebs kann die Lenkspindel mit einem Lenkgetriebe oder einem Feedback-Aktuator gekoppelt ist. Die koaxial angeordnete Lenkspindel kann in einer konventionellen Lenksäule durch die teleskopierende Anordnung von Außenmantel und Mantelrohr in Längsrichtung nach vorn zum Lenkgetriebe hindurchgeführt sein, oder auch in einer Steer-by-Wire-Lenkung ohne mechanische Kopplung eingesetzt werden, bei der die Lenkspindel mit einem Feedback-Aktuator verbunden sein kann, der innerhalb der Stelleinheit oder des Außenmantels angeordnet sein kann, oder auch außerhalb des Außenmantels, wobei die Lenkspindel wie in einer konventionellen Anordnung durch die Lenksäule hindurchgeführt sein kann.

Bei einer Lenksäule der eingangs genannten Art kann die Spindelmutter, oder alternativ die Gewindespindel, mindestens ein Umformelement aufweisen, welches in Wirkeingriff mit dem Energieabsorptionselement steht und von dem das Energieabsorptionselement plastisch verformbar ist.

Der Spindeltrieb ist mit dem Energieabsorptionselement in Richtung des Kraftflusses bei einer relativen Verschiebung im Crashfall zwischen Außenmantel und Stelleinheit in Reihe angeordnet, wie dies für die Funktionalität der Energieabsorption an sich bekannt ist. Im Crashfall wird das Energieabsorptionselement relativ zum Umformelement bewegt, welches an dem Spindeltrieb ausgebildet ist.

Vorteilhaft ist es, dass mindestens ein Umformelement an der Spindelmutter ausgebildet ist, beispielsweise zwischen der Spindelmutter und der Stelleinheit, die beim Verstellen im Normalbetrieb von der Spindelmutter in Längsrichtung mitgenommen wird, und nur im Crashfall relativ zur Spindelmutter bewegt wird. Dabei wirkt das erfindungsgemäße Umformelement auf das von der Stelleinheit mitgenommene und relativ zur Spindelmutter bewegte Energieabsorptionselement ein, dass dieses zumindest über einen Teil seiner Längserstreckung unter Umwandlung kinetischer Energie in Verformungsarbeit plastisch umgeformt wird.

Das Umformelement wird bevorzugt an dem bezüglich der relativen Rotation des Spindeltriebs relativ zur Lenksäule drehfest angebrachten Funktionselement angeordnet, beispielsweise an Spindelmutter, die drehfest an der Stelleinheit abgestützt ist und in die die drehend antreibbare Gewindespindel eingreift, wodurch ein sogenannter Rotationsspindelantrieb ausgebildet wird.

Alternativ ist es denkbar, bei einem sogenannten Tauchspindelantrieb die Spindelmutter drehend antreibbar in Längsrichtung am Außenmantel abzustützen, und die darin eintauchende, bezüglich der Lenksäule drehfest angebrachte Gewindespindel über die Energieabsorptionseinrichtung mit der Stelleinheit zu verbinden. In dieser Anordnung kann die Gewindespindel mindestens ein Umformelement aufweisen, welches im Crashfall eine Umformung des relativ dazu bewegten Energieabsorptionselements bewirkt.

Es ist vorteilhaft, dass das Umformelement mit der Spindelmutter integriert ausgebildet ist, bevorzugt einstückig. Durch das in die Spindelmutter integrierte Umformelement kann ein besonders kompakter Aufbau realisiert werden. Eine einstückige Integration, die durch spanende und/oder nichtspanende Umformung der Spindelmutter erfolgen kann, kann raumsparend und effizient gefertigt werden, und es kann eine hohe Stabilität und Funktionssicherheit der Energieabsorptionseinrichtung gewährleistet werden.

Bei einem Tauchspindelantrieb ist es denkbar, das Umformelement mit der Gewindespindel integriert auszubilden, bevorzugt einstückig.

Das Energieabsorptionselement kann bevorzugt als langgestreckter Biegedraht mit einer Länge ausgebildet sein, der relativ zum Umformelement bewegbar und von dem Umformelement zumindest teilweise entlang seiner Länge umformbar ist. Ein Biegedraht kann als länglicher Biegestreifen mit rundem oder eckigem Querschnitt ausgestaltet sein. Im Crashfall wird der Biegedraht über zumindest einen Teil seiner Länge relativ zu zumindest einem Umformelement bewegt, wobei durch das Umformelement eine plastische Umformung bewirkt wird, beispielsweise eine über die Längserstreckung des Biegedrahts fortlaufend hinwegbewegte Umbiegung, oder eine plastische Verformung des Drahtquerschnitts. Ein Biegedraht ist einfach und kostengünstig herstellbar und montierbar und hat definiert vorgebbare, kontrollierbare Energieabsorptionseigenschaften.

Das Umformelement kann mindestens einen Biegeamboss aufweisen, um den der Biegedraht quer zur Längsachse umgebogen ist, bevorzugt um 180°. Der Biegedraht oder Biegestreifen ist um zumindest einen Biegeamboss in einer Umbiegung herumgeführt, die sich, wenn der Biegedraht im Crashfall über zumindest einen Teil seiner Länge an der Spindelmutter oder der Gewindespindel entlanggezogen wird, unter fortlaufender Biegeverformung über zumindest eine Teil der Längserstreckung des Biegedrahts hinwegbewegt, wobei kontinuierlich kinetische Energie absorbiert wird. Beispielsweise kann der Biegedraht an einem ersten Ende an der Stelleinheit fixiert sein, und sich mit einem ersten Schenkel entgegen der Längsrichtung erstrecken bis zu einer Umbiegung, die sich an einen Biegeamboss anschmiegt, und die bevorzugt etwa 180° betragen kann. An die Umbiegung schließt sich ein zweiter Schenkel an, der sich bevorzugt entgegen der Ausrichtung des ersten Schenkels erstreckt, also in Längsrichtung. Im Crashfall wird der zweite Schenkel des Biegedrahts um den Biegeamboss herum bewegt, wobei er die Umbiegung durchläuft und der sich daran anschließende erste Schenkel verlängert wird.

Hinsichtlich der Montage ist es vorteilhaft, dass der Biegedraht ein mit der Stelleinheit verbundenes erstes Ende, und der ein zweites, freies Ende hat. Das erste Ende des Biegedrahts kann einen Befestigungsabschnitt aufweisen, der mit der Stelleinheit verbunden ist und im Crashfall relativ zum Umformelement in Längsrichtung bewegt wird. Das zweite Ende des Biegedrahts ist als freies Ende ausgebildet, welches weder mit der Spindelmutter, der Gewindespindel oder dem Außenmantel verbunden ist, sondern mit seinem vor dem Wirkeingriff liegenden Abschnitt lose aus dem Umformelement der Spindelmutter herausragt. Dadurch, dass lediglich das erste Ende des Biegedrahts an der Stelleinheit festgelegt werden muss, ergibt sich eine vereinfachte Montage.

Eine vorteilhafte Ausführung sieht vor, dass die Spindelmutter oder die Gewindespindel mindestens ein Führungselement aufweist. Durch das Führungselement wird das Energieabsorptionselement im Crashfall geführt, so dass die Verformung kontrolliert erfolgt und entsprechend eine definierte Energieabsorptionscharakteristik sichergestellt ist. Beispielsweise kann ein Führungselement als Führungsnut in Form einer in Längsrichtung verlaufenden Ausnehmung ausgebildet sein, in dem ein als Biegedraht oder -streifen ausgeführtes Energieabsorptionselement in Längsrichtung geführt ist, in dem es im Crashfall beispielsweise zu einem Biegeamboss entlanggleiten kann. Vorzugsweise sind ein oder mehrere Führungselemente einstückig mit der Spindelmutter ausgebildet, beispielsweise als eingeformte nutförmige Ausnehmungen, die als Führungsnuten dienen. Der Biegedraht oder -streifen ist in Richtung seiner Längserstreckung in einer Ausnehmung geführt, so dass er im Crashfall bei einer relativen Bewegung zur Spindelmutter oder zur Gewindespindel darin geführt entlanggleitet.

In einer vorteilhaften Ausführung kann vorgesehen sein, dass der Biegedraht zur Bildung einer Vorratsspule, auch als Vorratscoil oder kurz Coil bezeichnet, bevorzugt koaxial zur Spindelachse schraubenförmig gewickelt ist. Vorzugsweise weist die Vorratsspule mehrere Windungen um die Spindelachse auf. Bevorzugt kann die die Vorratsspule auf einen im Wesentlichen zylindrischen Wickelabschnitt, der koaxial zur Spindelachse an der Spindelmutter ausgebildet ist, schraubenförmig um die Spindelachse auf der Spindelmutter aufgewickelt sein.

Die Vorratsspule kann bevorzugt als einlagige, flache Spule ausgeführt sein, welche bevorzugt mehrere axial aufeinander folgende Windungen hat. Beim Crash wird der Biegedraht von der Vorratsspule vorzugsweise in axialer Richtung abgezogen und unter jeweiliger Verrichtung von Umformungsarbeit an mindestens einem Umformelement entlang bewegt. Beispielsweise kann ein Biegedraht um einen oder mehrere Biegeambosse herumgebogen werden, bis er nach dem Crash zwischen seiner Befestigung an dem Mantelrohr und der Spindelmutter in Längsrichtung gestreckt ist.

Besonders bei weit ineinander einfahrbaren, verstaubaren Lenksäulen können lange Verformungswege realisiert sein. Durch die Vorratsspule kann ein relativ langer Biegedraht eingesetzt werden, der in der Vorratsspule in mehreren Windungen gespeichert sein kann. Beim Abspulen von der Vorratsspule im Crashfall kenn der fortlaufend umgebogene Biegestreifen kinetische Energie gleichmäßig über einen langen Verformungsweg absorbieren.

Unter langen Verformungswegen werden bevorzugt Wege über 80mm verstanden.

Es ist vorteilhaft, dass die Vorratsspule im Wesentlichen in axialer Richtung bezüglich der Spindelachse auseinanderziehbar und abwickelbar ist. Dadurch kann die Vorratsspule im Crashfall kontinuierlich fortlaufend von dem Wickelabschnitt abgespult werden. Durch das Abspulen in axialer Richtung kann der auf der Vorratsspule gespeicherte Biegedraht gleichmäßig abgespult werden, und es wird verhindert, dass sich die Windungen schlingenartig auf dem Wickelabschnitt festziehen, wodurch die zum Abspulen erforderliche Kraft erhöht werden könnte.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine weitere perspektivische Ansicht der Lenksäule gemäß Figur 1,
- Figur 3: eine schematische perspektivische Teilansicht der Lenksäule gemäß Figur 1,
- Figur 4: einen teilweisen Längsschnitt durch die Lenksäule gemäß Figur 1,
- Figur 5: einen Querschnitt durch die Lenksäule gemäß Figur 1,
- Figur 6: eine Detailansicht aus Figur 5,
- Figur 7: eine schematische perspektivische Ansicht einer teilweise geschnittenen Stelleinheit einer Lenksäule gemäß Figur 1,
- Figur 8: eine freigestellte Einzeldarstellung von Funktionselementen der Anordnung gemäß Figur 7,
- Figur 9: eine weitere perspektivische Ansicht der Anordnung gemäß Figur 7,
- Figur 10: eine freigestellte Einzeldarstellung von Funktionselementen der Anordnung gemäß Figur 9,
- Figur 11: eine schematische perspektivische Ansicht einer Spindelmutter mit Energieabsorptionselement in einer zweiten Ausführungsform in unverformtem Zustand vor einem Crashfall,
- Figur 12: die Spindelmutter gemäß Figur 11 in verformtem Zustand nach einem Crashfall,
- Figur 13: das Energieabsorptionselement gemäß Figur 11 in freigestellter Ansicht,
- Figur 14: eine schematische perspektivische Ansicht einer Spindelmutter mit Energieabsorptionselement in einer dritten Ausführungsform in unverformtem Zustand vor einem Crashfall,
- Figur 15: eine schematische perspektivische Ansicht einer teilweise geschnittenen Stelleinheit einer Lenksäule analog zu Figur 7 mit einem Energieabsorptionselement in einer vierten Ausführungsform,
- Figur 16: eine schematische perspektivische Ansicht einer Spindelmutter mit Energieabsorptionselement in der vierten Ausführungsform in unverformtem Zustand vor einem Crashfall,
- Figur 17: das Energieabsorptionselement gemäß Figur 16 in freigestellter Ansicht,
- Figur 18: die Spindelmutter gemäß Figur 16 mit einem Energieabsorptionselement in verformtem Zustand nach einem Crashfall.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

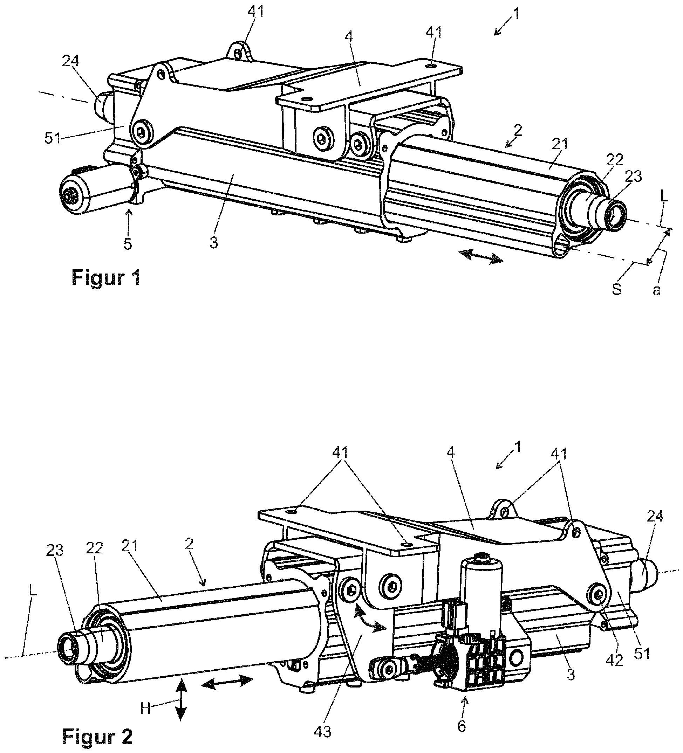

Figuren 1 und 2 zeigen eine erfindungsgemäße Lenksäule 1 als Ganzes in perspektivischen Ansichten von hinten links und rechts, bezogen auf die Fahrtrichtung eines nicht dargestellten Kraftfahrzeugs. Die Lenksäule 1 weist eine Stelleinheit 2 auf, mit einem Mantelrohr 21, in dem eine Lenkspindel 22 koaxial um eine Längsachse L drehbar gelagert ist. An ihrem in Einbaulage im Kraftfahrzeug dem Fahrer zugewandten, lenkradseitigen, hinteren Ende weist die Lenkspindel 22 einen Befestigungsabschnitt 23 zur Anbringung eines nicht dargestellten Lenkrads auf. Mit ihrem vorderen Endabschnitt 24, welcher vorn lenkgetriebeseitig aus der Lenksäule 1 vorsteht, kann die Lenkspindel 22 über eine nicht dargestellte Zwischenwelle mechanisch mit einem ebenfalls nicht dargestellten Lenkgetriebe verbunden sein.

Die Stelleinheit 2 ist in einem Außenmantel 3 in Längsrichtung, d.h. in Richtung der Längsachse L teleskopierend aufgenommen, wobei das Mantelrohr 21 nach vorn in den Außenmantel 3 eingefahren, oder nach hinten ausgefahren werden kann, wie in Figur 1 mit einem Doppelpfeil angedeutet ist.

Der Außenmantel 3 ist in einer Trageinheit 4 gehalten, welche Befestigungsmittel 41 aufweist zur Verbindung mit einer nicht dargestellten Fahrzeugkarosserie. An dem Außenmantel 3 ist im vorderen, lenkgetriebseitigen Bereich eine Antriebseinheit 51 eines Verstellantriebs 5 befestigt, zur teleskopierenden Längenverstellung der Stelleinheit 2 relativ zum Außenmantel 3, wie weiter unten noch erläutert wird.

Figur 2 ist entnehmbar, dass der Außenmantel 3 in seinem vorderen Bereich um eine horizontale Schwenkachse 42 verschwenkbar und in seinem hinteren Bereich an der Trageinheit 4 über einen Stellhebel 43 angelenkt ist, der von einem motorischen Höhenverstellantrieb 6 relativ zur Trageinheit 4 verschwenkbar ist, so dass das lenkradseitige, hintere Ende der Lenkspindel 22 zur Höhenverstellung des Lenkrads in Höhenrichtung H relativ zur Trageinheit 4 auf und ab verstellbar ist, wie mit dem Doppelpfeil angedeutet.

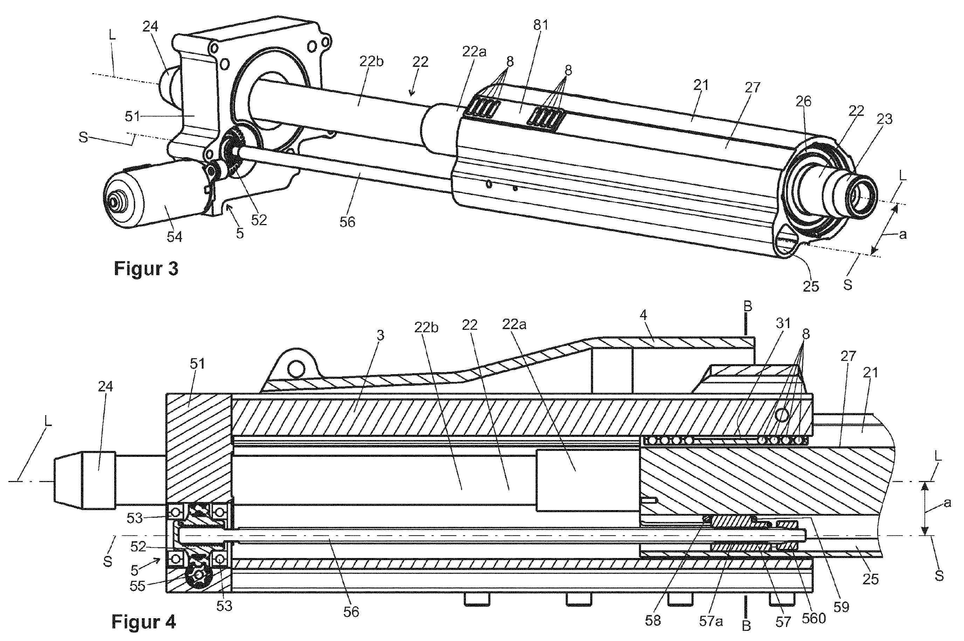

Figur 3 zeigt in derselben Perspektive wie Figur 1 eine freigestellte Ansicht, wobei der Außenmantel 3 zur besseren Übersicht weggelassen ist. In Figur 4 ist ein Längsschnitt entlang der Längsachse L in Seitenansicht dargestellt. Die Antriebseinheit 51 des Verstellantriebs 5 ist fest mit dem vorderen Ende des Außenmantels 3 verbunden und weist ein Schneckenrad 52 auf, welches in Lagern 53 um eine Spindelachse S drehbar, in Längsrichtung an der Antriebseinheit 51 abgestützt ist, wie in dem Längsschnitt von Figur 4 erkennbar ist. Eine von einem elektrischen Stellmotor 54 drehend antreibbare Schnecke 55 kämmt mit dem Schneckenrad 52, so dass dieses von dem Stellmotor 54 um die Spindelachse S drehend antreibbar ist.

Mit dem Schneckenrad 52 ist eine Gewindespindel 56 drehfest verbunden, die sich auf der besagten Spindelachse S erstreckt. Die Gewindespindel 56 ist in eine Spindelmutter 57 in eine Gewindebohrung 57a eingeschraubt, die gegen Verdrehung um die Spindelachse S gesichert, in Längsrichtung abgestützt an dem Mantelrohr 21 der Stelleinheit 2 angebracht ist, wie weiter unten noch im Detail erläutert wird. Die Gewindespindel 56 weist an ihrem freien Ende einen Anschlagkörper 560 auf, der die Bewegung der Spindelmutter 57 auf der Gewindespindel 56 begrenzt.

Je nach Antriebsrichtung durch den Stellmotor 54 rotiert die Gewindespindel 56, und wird in die Gewindebohrung 57a der Spindelmutter 57 entweder eingeschraubt, welche dadurch das Mantelrohr 21 und damit die Stelleinheit 2 teleskopartig nach vorn in Richtung auf die Antriebseinheit 51 in den Außenmantel 3 - in Figur 4 nach links - einfährt, oder die Gewindespindel 56 wird aus der Spindelmutter 57 herausgeschraubt, so dass die Stelleinheit 2 nach hinten aus dem Außenmantel 3 - in Figur 4 nach rechts - herausgefahren wird.

Die Lenkspindel 22 weist ein oberes Lenkspindelteil 22a und ein unteres Lenkspindelteil 22b auf, die miteinander drehfest, in Längsrichtung teleskopartig relativ zueinander verstellbar sind, um die Längsverstellung der Lenksäule 1 zu ermöglichen.

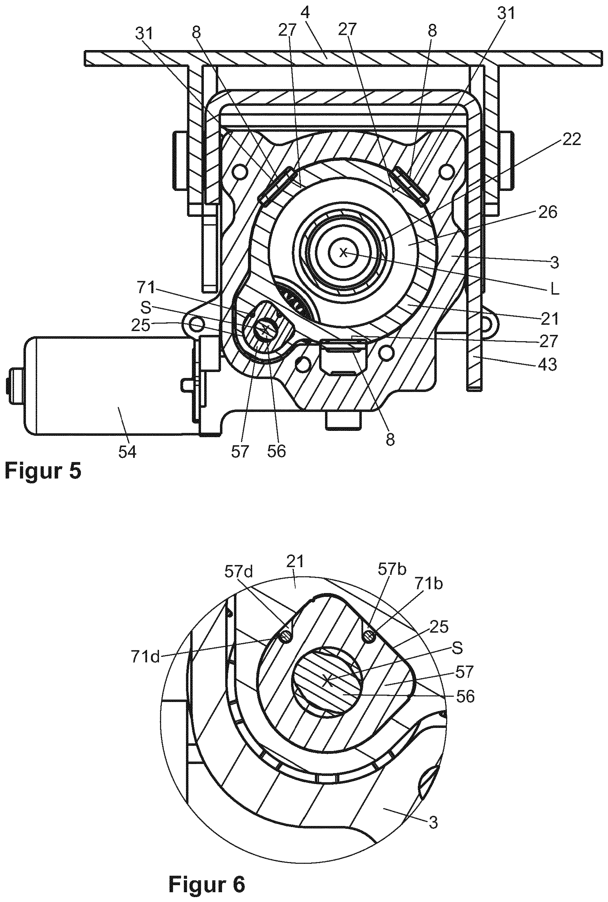

Die Spindelachse S ist im gezeigten Beispiel im Wesentlichen mit einem Abstand a parallel zur Längsachse L angeordnet, d.h. die Gewindespindel 56 hat radialen Abstand a zur Lenkspindel 22, und ist erfindungsgemäß zumindest abschnittweise innerhalb eines Spindeltunnels 25 innerhalb der Stelleinheit 2 angeordnet. Der Spindeltunnel 25 wird gebildet durch eine in Längsrichtung durch das Mantelrohr 21 hindurchgehende Öffnung, die separat von der ebenfalls längsdurchgehenden Öffnung 26 ausgebildet ist, in der koaxial auf der Längsachse L die Lenkspindel 22 gelagert ist, wie dem in Figur 6 dargestellten Querschnitt B-B aus Figur 5 entnehmbar ist.

Beim Einfahren der Stelleinheit 2 in den Außenmantel 3 taucht die Gewindespindel 56 weiter in den Spindeltunnel 25 ein. In jedem Einstellzustand der Lenksäule 1 ist die Gewindespindel 56 geschützt in dem Spindeltunnel 25 untergebracht.

Der vergrößerte Ausschnitt des Querschnitts in Figur 6 zeigt, dass der Spindeltunnel 25 einen unrunden Querschnitt hat, in den die Spindelmutter 57 formschlüssig eingesetzt ist, so dass sie durch den Formschluss gegen Drehung um die Spindelachse S relativ zum Mantelrohr 21 gesichert ist.

In Längsrichtung ist die Spindelmutter 57 nach vorn durch einen Fixierbolzen 58 gesichert, der den Spindeltunnel 25 quer durchsetzt und fest in das Mantelrohr 21 eingefügt ist. Nach hinten ist die Spindelmutter 57 mittels eines Sollbruchelements in Form eines Scherstifts 59 in Längsrichtung gesichert, welcher ebenfalls den Spindeltunnel 25 quer durchsetzt. Die Spindelmutter 57 ist folglich zwischen Fixierbolzen 58 und Scherstift 59 festgelegt.

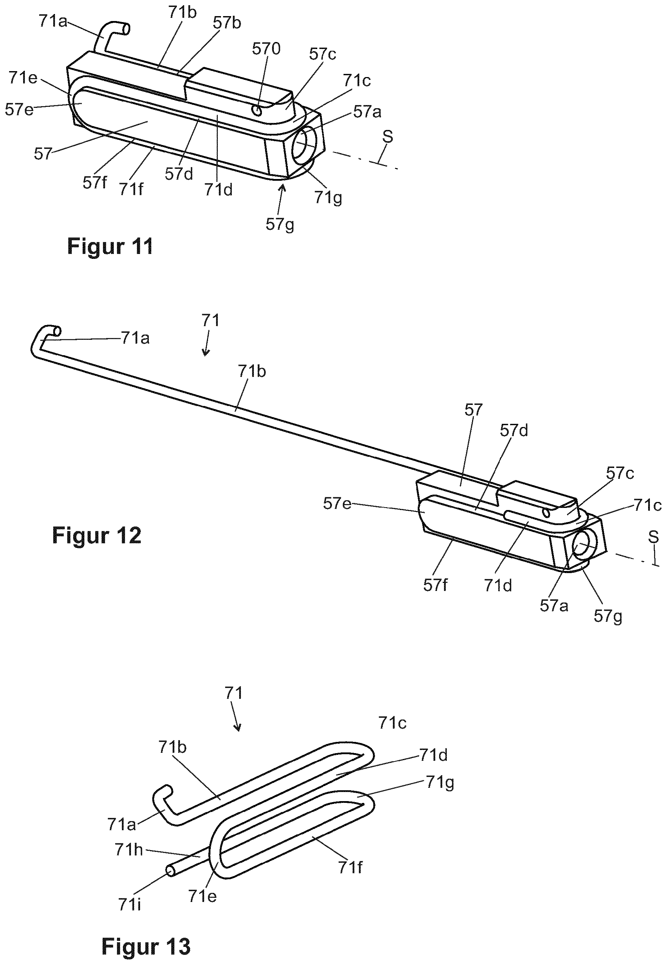

Zwischen der Spindelmutter 57 und dem Mantelrohr 21 ist eine Energieabsorptionseinrichtung 7 angeordnet, die ein Energieabsorptionselement 71 in Form eines Biegedrahts 71 aufweist, welcher in den Figuren 6 bis 10 in einer ersten Ausführungsform, und in den Figuren 11 bis 13 in einer zweiten Ausführung gezeigt ist.

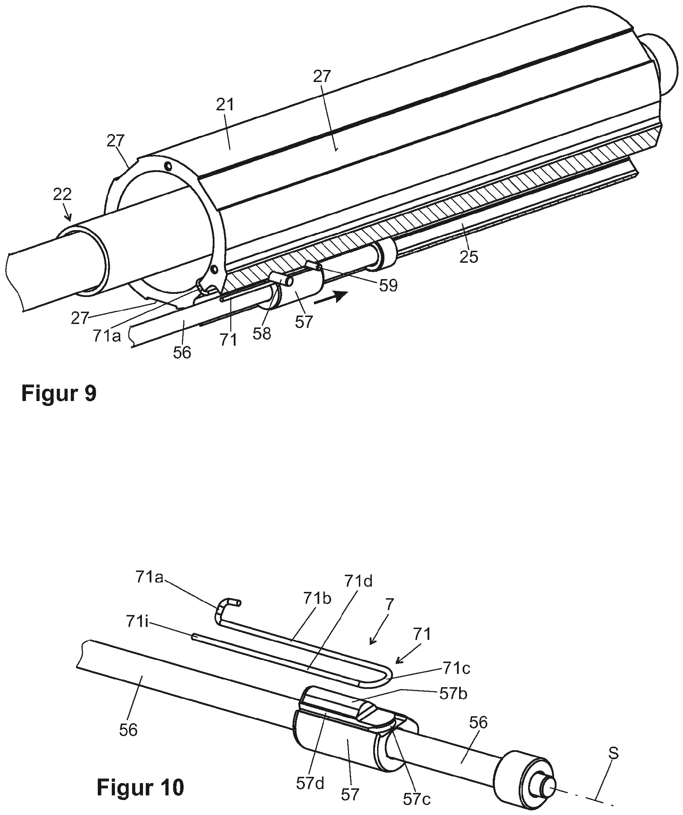

Der auseinander gezogenen Darstellung in Figur 10 ist entnehmbar, dass der Biegedraht 71 einen Befestigungsabschnitt 71a aufweist, an den sich ein erster, in Längsrichtung nach hinten verlaufender erster Schenkel 71b anschließt, der über eine Umbiegung 71c von im Wesentlichen 180° in einen entgegen der Längsrichtung nach vorn verlaufenden zweiten Schenkel 71d übergeht. Der Befestigungsabschnitt 71a ist an dem vorderen Ende des Mantelrohrs 21 befestigt, nämlich formschlüssig eingehakt, wie in Figur 9 ersichtlich. Der erste Schenkel 71b ist zwischen einer in Längsrichtung verlaufenden nutförmigen Ausnehmung 57b der Spindelmutter 57 angeordnet und in dem Spindeltunnel 25 nach hinten hindurchgeführt, dann um einen an der Spindelmutter 57 ausgebildeten Biegeamboss 57c herumgeführt, und mit dem zweiten Schenkel 57c in einer nutförmigen Ausnehmung 57d zwischen der Spindelmutter 57 und dem Spindeltunnel 25 nach vorn geführt. Die Anordnung der Schenkel 71a und 71b ist in Figur 6 deutlich erkennbar.

Die nutförmigen Ausnehmungen 57b und 57d und der Biegeamboss 57c bilden eine Führungseinrichtung, durch die der Biegedraht 71 im Crashfall hindurchgezogen wird und durch die dabei erfolgende plastische Verformung beim Umbiegen kontinuierlich kinetische Energie absorbiert.

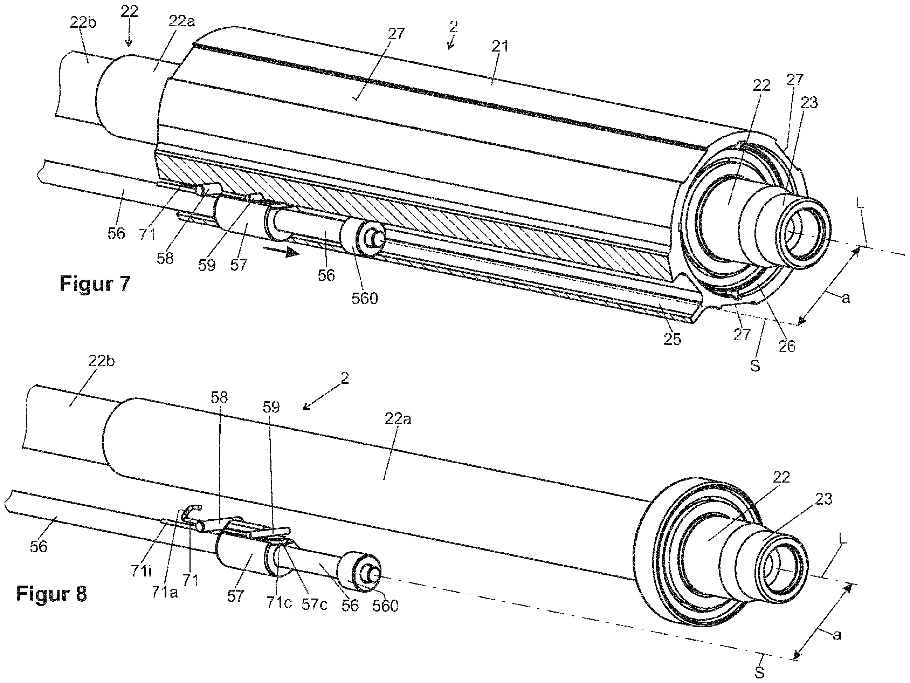

Figuren 7 und 9 zeigen perspektivische Ansichten, wobei der Spindeltunnel 25 in Längsrichtung aufgeschnitten ist, In Figur 8 ist in derselben Ansicht wie in Figur 7 das Mantelrohr 21 zur besseren Übersicht weggelassen. Daraus ist erkennbar, wie der Biegedraht 71 innerhalb des Spindeltunnels 25 um die Spindelmutter 57 herumgeführt ist.

Die Energieabsorptionseinrichtung 7 wird im Crashfall aktiviert, wenn durch einen aufprallenden Körper eine hohe Kraftspitze über die Lenkspindel 22 nach vorn auf die Stelleinheit 2 ausgeübt wird. Dadurch wird die Spindelmutter 57, die sich nach vorn gegen die Gewindespindel 56 abstützt, in Längsrichtung nach hinten mit dieser großen Kraft gegen den Scherstift 59 angedrückt, der bei Überschreitung einer vorgegebenen Sollbruch-Grenzkraft bricht, und die Bewegung der Spindelmutter 57 innerhalb des Spindeltunnels 25 relativ zum Mantelrohr 21 nach hinten freigibt. Die Bewegung der Spindelmutter 57 relativ zum Mantelrohr 21 im Crashfall ist in Figuren 7 und 9 mit einem Pfeil angedeutet.

Bei der relativen Bewegung von Spindelmutter 57 und Mantelrohr 21 nimmt das Mantelrohr 21 den Befestigungsabschnitt 71a des Biegedrahts 71 mit, so dass der erste Schenkel 71b relativ zur Spindelmutter 57 in der Ausnehmung 57b nach vorn gezogen wird, und infolge dessen der zweite Schenkel 57d bezüglich der Spindelmutter 57 nach hinten bewegt und dabei um den Biegeamboss 57c herumgezwungen wird, so dass die Umbiegung 71c fortlaufend über den Biegedraht 71 bewegt wird, wobei kontinuierlich kinetische Energie zur Energieabsorption in Verformungsarbeit und zu einem geringen Teil auch in Wärme auf Grund der wirkenden Reibung zwischen Biegedraht 71 und Spindelmutter 57 umgewandelt wird, so dass ein kontrolliertes Abbremsen der Stelleinheit 2 relativ zum Außenmantel 3 bewirkt wird. Der Biegedraht 71 weist einen Endabschnitt 71i, der auch als freies Ende bezeichnet werden kann, wobei der Endabschnitt 71i nicht festgelegt ist und sich somit im Crashfall relativ zur Spindelmutter 57 bewegt. Somit bewegt sich der Befestigungsabschnitt 71a zusammen mit der Stelleinheit 2, wobei sich der Endabschnitt 71i sowohl relativ zur Stelleinheit 2 als auch relativ zur Spindelmutter 57 bewegt.

Erfindungsgemäß ist sowohl die Gewindespindel 56 als auch die Energieabsorptionseinrichtung 7 mit dem Biegedraht 71 geschützt und damit funktionssicher innerhalb der Stelleinheit 2 untergebracht, im gezeigten Beispiel innerhalb des Spindeltunnels 25.

Eine zweite Ausführung einer Energieabsorptionseinrichtung mit einem Biegedraht 71 ist in den Figuren 11 bis 13 dargestellt. Dieser weist zusätzlich zu der vorangehend beschriebenen ersten Ausführung eine sich an den zweiten Schenkel 71b anschließende zweite Umbiegung 71e von etwa 180° auf, an die sich ein dritter Schenkel 71f anschließt, der über eine dritte Umbiegung 71g von Im Wesentlichen 180° in einen vierten Schenkel 71h übergeht. Die Schenkel 71b und 71f weisen in, die Schenkel 71d und 71h entgegen der Längsrichtung.

Die Spindelmutter 57 weist eine Führungseinrichtung auf, umfassend mit dem Verlauf des Biegedrahts 71 korrespondierende Ausnehmungen 57 b,d,f h, und einen zweiten Biegeamboss 57e, um den die Umbiegung 71e herumgeführt ist, und einen dritten Biegeamboss 57g, um den die Umbiegung 71g herumgeführt ist. Vor einem Crahfall ist der Biegedraht 71 wie in Figur 11 gezeigt in der Führungseinrichtung Spindelmutter 57 angeordnet. Beim Crash wird der Biegedraht 71 durch die Ausnehmung 57b, 57d, 57f, 57h unter jeweiliger Verrichtung von Umformungsarbeit um die insgesamt drei Biegeambosse 57c, 57g und 57e herumgezogen, bis er nach dem Crash wie in Figur 12 dargestellt in Längsrichtung gestreckt ist. Dadurch kann ein relativ langer Biegedraht 71 eingesetzt werden, der in der Führungseinrichtung mehrfach um die Spindelmutter 57 gewunden ist, und im Crashfall kinetische Energie gleichmäßig über einen langen Verformungsweg absorbieren kann. Die Spindelmutter 57 der zweiten Ausführungsform weist eine Bohrung 570 auf, die orthogonal zur Spindelachse S angeordnet ist. In dieser Bohrung ist der Scherstift 59, der mit der Stelleinheit gekoppelt ist, einsetzbar. Durch die Anbringung an der Spindelmutter 57 innerhalb der Stelleinheit 2, insbesondere in dem Spindeltunnel 25, ist eine besonders kompakte und geschützte Bauweise möglich. Der Biegedraht 71 weist einen Endabschnitt 71i, der auch als freies Ende bezeichnet werden kann, wobei der Endabschnitt 71i nicht festgelegt ist und sich somit im Crashfall relativ zur Spindelmutter 57 bewegt. Somit bewegt sich im Crashfall der Befestigungsabschnitt 71a zusammen mit der Stelleinheit 2, wobei sich der Endabschnitt 71i sowohl relativ zur Stelleinheit 2 als auch relativ zur Spindelmutter 57 bewegt.

Das Mantelrohr 21 kann als Strangpressprofil ausgebildet sein, beispielsweise aus einer Aluminium- oder Magnesiumlegierung.

Zur Realisierung einer leichtgängigen Linearlagerung der Stelleinheit 2 in dem Außenmantel 3 können außen auf dem Mantelrohr 21 Wälzkörperlaufbahnen 27 ausgebildet sein, im gezeigten Beispiel drei Wälzkörperlaufbahnen 27 über den Umfang verteilt, die sich über die gesamte Länge erstrecken, und einstückig in das Mantelrohr 21 eingeformt sein können. Diesen radial gegenüberliegend sind korrespondierende Wälzkörperlaufbahnen 31 innen im Außenmantel 3 ausgebildet. Zwischen den Wälzkörperlaufbahnen 27 und 31 sind als Wälzkörper Rollen 8 in einem Rollenkäfig 81 drehbar angeordnet, die zur Bildung einer leichtgängigen Linearlagerung beim Verstellen der Lenksäule 1 in Längsrichtung abrollen können.

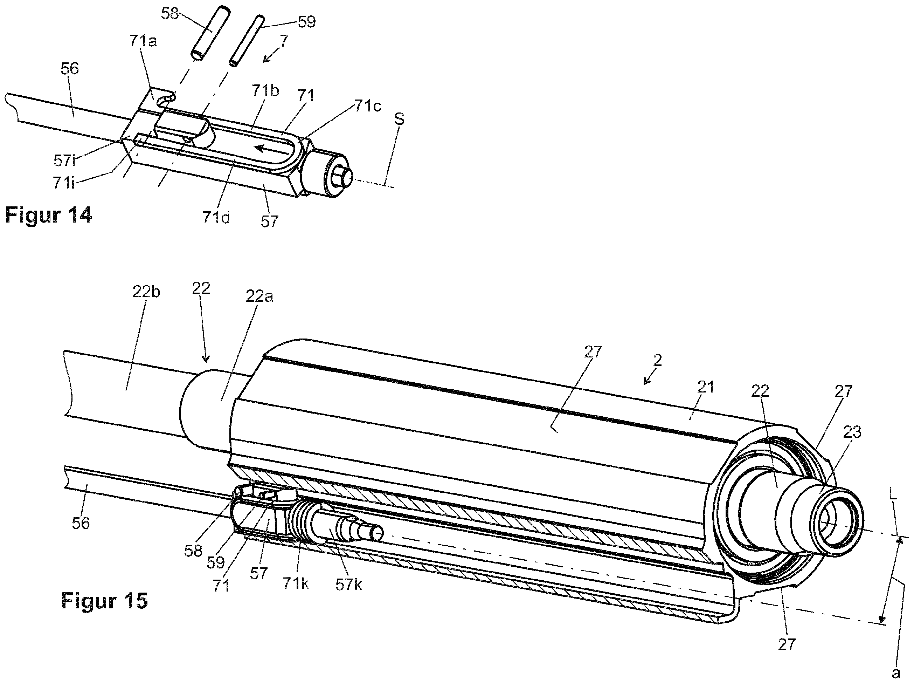

In Figur 14 ist eine Spindelmutter 57 mit einer Energieabsorptionseinrichtung in einer dritten Ausführung in einer Ansicht ähnlich wie in Figur 11 gezeigt. Diese weist einen Biegedraht 71 auf, mit einem ersten Schenkel 71b und einem zweiten Schenkel 71d. Der in Längsrichtung nach hinten verlaufende erste Schenkel 71b weist vorn an seinem freien Ende einen hakenförmigen Befestigungsabschnitt 71a auf, und geht über eine Umbiegung 71c von im Wesentlichen 180° in den entgegen der Längsrichtung nach vorn verlaufenden zweiten Schenkel 71d über. Die Umbiegung 71c ist in dieser Ausführung frei umgebogen, d.h. sie ist nicht wie in Figur 11 um einen Biegeamboss 57c anliegend herumgeführt. Mit dem vorderen, freien Ende 71i stützt sich der zweite Schenkel 71d nach vorn gegen ein Widerlager 57i an der Spindelmutter 57 ab. Der Biegedraht 71 weist einen rechteckigen Querschnitt auf.

Mit dem Befestigungsabschnitt 71a ist der Biegedraht 71 am Mantelrohr 21 eingehakt, wie dies für die Ausführung in Figuren 10 bis 12 beschrieben ist. Im Crashfall wird der Biegedraht 71 fortlaufend umgebogen, wobei die in dieser Ausführung freie Umbiegung 71c in Längsrichtung relativ zur Spindelmutter 57 wandert, wie in Figur 14 mit dem Pfeil angedeutet.

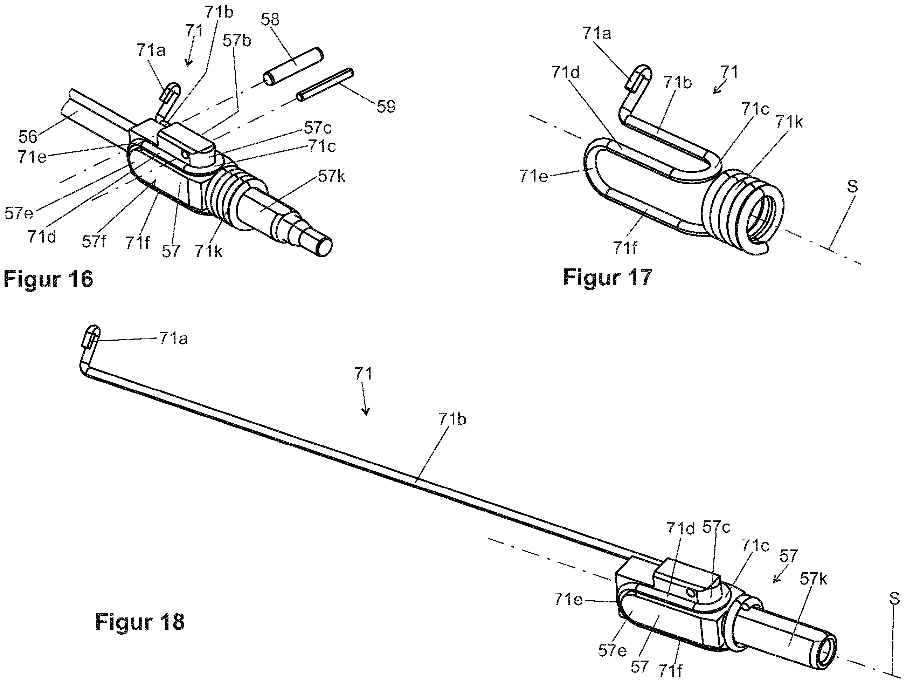

In den Figuren 15 bis 18 ist eine vierte Ausführungsform einer Energieabsorptionseinrichtung 7 gezeigt, wobei die Ansicht von Figur 15 der Ansicht von Figur 7 entspricht, Figur 16 der Ansicht von Figur 11 oder 14, Figur 17 der Ansicht von Figur 13, und Figur 18 die Situation nach einem Crashfall analog zu Figur 12 zeigt. Für gleichwirkende Bestandteile werden jeweils die gleichen Bezugszeichen verwendet.

Die Spindelmutter 57 weist ähnlich wie die in Figur 12 gezeigte Ausführung die nutförmigen Ausnehmungen 57b, 57d und 57f auf, in deren Verlauf die Biegeambosse 57c und 57e angeordnet sind. Dadurch wird wie eine Führungseinrichtung gebildet, durch die der Biegedraht 71 im Crashfall hindurchgezogen wird und durch die dabei erfolgende plastische Verformung beim Umbiegen kontinuierlich kinetische Energie absorbiert.

Wie in Figur 17 deutlich erkennbar, weist der Biegedraht 71 einen hakenförmigen Befestigungsabschnitt 71a auf, an den sich ein erster, in Längsrichtung nach hinten verlaufender erster Schenkel 71b anschließt, der über eine Umbiegung 71c von im Wesentlichen 180° in einen entgegen der Längsrichtung nach vorn verlaufenden zweiten Schenkel 71d übergeht. Der Befestigungsabschnitt 71a ist an dem vorderen Ende des Mantelrohrs 21 befestigt, nämlich formschlüssig eingehakt, wie in Figur 9. Der erste Schenkel 71b ist in der in Längsrichtung verlaufenden nutförmigen Ausnehmung 57b der Spindelmutter 57 angeordnet und in dem Spindeltunnel 25 nach hinten hindurchgeführt, dann im Bereich seiner Umbiegung 71c um den Biegeamboss 57c herumgeführt. Der sich an die Umbiegung 71c anschließende zweite Schenkel 57c in der nutförmigen Ausnehmung 57d angeordnet, und mit der Umbiegung 71e um den zweiten Biegeamboss 57e herumgeführt, und geht in den dritten Schenkel 71f über. Im Anschluss daran ist der Biegedraht 71 zur Bildung einer Vorratsspule 71k, auch als Vorratscoil oder kurz Coil bezeichnet, auf einen im Wesentlichen zylindrischen Wickelabschnitt 57k, der sich koaxial zur Spindelachse S nach hinten gerichtet an der Spindelmutter 57 ausgebildet ist, schraubenförmig um die Spindelachse S aufgewickelt.

Wie in Figur 17 erkennbar ist die Vorratsspule 71k als einlagige, flache Spule ausgeführt, welche bevorzugt mehrere axial aufeinander folgende Windungen hat. Beim Crash wird der Biegedraht 71 von der Vorratsspule 71k in axialer Richtung in die Ausnehmung 57 eingezogen und wird durch die Ausnehmungen 57f, 57d und 57b unter jeweiliger Verrichtung von Umformungsarbeit um die dazwischen liegenden zwei Biegeambosse 57e und 57c herumgezogen, bis er nach dem Crash wie in Figur 18 dargestellt zwischen dem Befestigungsabschnitt 71a und der Spindelmutter 57 in Längsrichtung gestreckt ist.

Es kann ein relativ langer Biegedraht 71 eingesetzt werden, der in der Vorratsspule 71k in mehreren Windungen gespeichert sein kann. Beim Abspulen von der Vorratsspule im Crashfall kann der um die Biegeambosse 57e und 57c fortlaufend umgebogene Biegestreifen 71 kinetische Energie gleichmäßig über einen langen Verformungsweg absorbieren kann.

Ein besonderer Vorteil dieser Anordnung ist, dass die Vorratsspule 71k über den Schenkel 71f im Wesentlichen in axialer Richtung bezüglich der Spindelachse S auseinandergezogen und abgewickelt wird. Dadurch kann die Vorratsspule 71k im Crashfall kontinuierlich fortlaufend von dem Wickelabschnitt 57k abgespult werden, bis der in Figur 18 gezeigte Zustand erreicht ist, der analog zu Figur 12 erreicht ist. Durch das Abspulen in axialer Richtung kann der auf der Vorratsspule 71k gespeicherte Biegedraht gleichmäßig abgespult werden, und es wird verhindert, dass sich die Windungen schlingenartig auf dem Wickelabschnitt 57 festziehen, wodurch die zum Abspulen erforderliche Kraft erhöht werden könnte.

Ein Vorteil der in den Figuren 15 bis 18 beschriebenen Ausführung ist, dass die Biegeambosse 57e und 57c über den gesamten Verformungsweg, dieser entspricht der Länge des in der Vorratsspule 71k gespeicherten Biegedrahts 71, mit dem Biegedraht 71 in Verformungseingriff sind. Dadurch ist die Verformungsleistung im Crashfall im Wesentlichen konstant, und es erfolgt eine gleichmäßige Abbremsung.

### Bezugszeichenliste

- 1: Lenksäule
- 2: Stelleinheit
- 21: Mantelrohr
- 22: Lenkspindel
- 22a,b: Lenkspindelteil
- 23: Befestigungsabschnitt
- 24: Endabschnitt
- 25: Spindeltunnel
- 26: Öffnung
- 27: Wälzkörperlaufbahnen
- 3: Außenmantel
- 31: Wälzkörperlaufbahnen
- 4: Trageinheit
- 41: Befestigungsmittel
- 42: Schwenkachse
- 43: Stellhebel
- 5: Verstellantrieb
- 51: Antriebseinheit
- 52: Schneckenrad
- 53: Lager
- 54: Stellmotor
- 55: Schnecke
- 56: Gewindespindel
- 57: Spindelmutter
- 57a: Gewindebohrung
- 57b,d,f,h: Ausnehmung (Führungsnut)
- 57c,e,g: Biegeamboss
- 57i: Widerlager
- 57k: Wickelabschnitt
- 58: Fixierbolzen
- 59: Scherstift
- 6: Höhenverstellantrieb
- 7: Energieabsorptionseinrichtung
- 71: Biegedraht
- 71a: Befestigungsabschnitt
- 71b,d,f,h: Schenkel
- 71c,e,g: Umbiegung
- 71i: Endabschnitt
- 71: Vorratsspule
- 8: Rolle
- 81: Rollenkäfig
- L: Längsachse
- S: Spindelachse

## Patentansprüche

1. Motorisch verstellbare Lenksäule (1) für ein Kraftfahrzeug, umfassend einen Außenmantel (3), der von einer an einer Fahrzeugkarosserie anbringbaren Trageinheit (4) gehalten ist und in dem in Längsrichtung teleskopierend verstellbar eine Stelleinheit (2) aufgenommen ist, in der eine Lenkspindel (22) koaxial in einem Mantelrohr (21) um eine Längsachse (L) drehbar gelagert ist, wobei zwischen Außenmantel (3) und Stelleinheit (2) ein Verstellantrieb (5) angeordnet ist, der eine zumindest teilweise innerhalb der Stelleinheit (2) angeordnete Gewindespindel (56) aufweist, die von einem elektrischen Stellmotor (54) drehend antreibbar in eine Spindelmutter (57) eingreift, wobei die Gewindespindel (56) mit Abstand (a) zur Längsachse (L) angeordnet ist, und wobei die Stelleinheit (2) eine die Lenkspindel (22) aufnehmende Öffnung (26) aufweist, und die Gewindespindel (56) in einem von der Öffnung (26) separat ausgebildeten Spindeltunnel (25) angeordnet ist, **dadurch gekennzeichnet, dass** die Öffnung (26) und der Spindeltunnel (25) in dem Mantelrohr (21) der Stelleinheit (2) ausgebildet sind.

2. Lenksäule nach Anspruch 1, **dadurch gekennzeichnet, dass** die Gewindespindel (56) an dem Außenmantel (3) in Längsrichtung abgestützt ist, und die Spindelmutter (57) in Längsrichtung abgestützt drehfest an der Stelleinheit (2) angebracht ist.

3. Lenksäule nach einem der vorangehenden Ansprüche, **dadurch gekennzeichnet, dass** die Gewindespindel (56) parallel zur Längsachse (L) angeordnet ist.

4. Lenksäule nach einem der vorangehenden Ansprüche, **dadurch gekennzeichnet, dass** die Öffnung (26) und der Spindeltunnel (25) jeweils umfangsseitig geschlossen sind.

5. Lenksäule nach einem der vorangehenden Ansprüche, **dadurch gekennzeichnet, dass** das Mantelrohr (21) als Strangpressprofil ausgebildet ist.

6. Lenksäule nach einem der vorangehenden Ansprüche, **dadurch gekennzeichnet, dass** die Spindelmutter (57) in dem Spindeltunnel (25) befestigt ist.

7. Lenksäule nach einem der vorangehenden Ansprüche, **dadurch gekennzeichnet, dass** der Außenmantel (3) ein Strangpressprofil aufweist.

8. Lenksäule nach einem der vorangehenden Ansprüche, **dadurch gekennzeichnet, dass** zwischen dem Außenmantel (3) und der Stelleinheit (2) zumindest eine gleitende oder wälzgelagerte Linearführung (8) ausgebildet ist.

9. Lenksäule nach einem der vorangehenden Ansprüche, **dadurch gekennzeichnet, dass** zwischen dem Außenmantel (3) und der Stelleinheit (2) eine Energieabsorptionseinrichtung (7) angeordnet ist.

10. Lenksäule nach Anspruch 9, **dadurch gekennzeichnet, dass** die Energieabsorptionseinrichtung (7) ein direkt oder mittelbar zwischen der Spindelmutter (57) oder der Gewindespindel (56) und der Stelleinheit (2) angeordnetes Energieabsorptionselement (71) aufweist.

11. Lenksäule nach einem der vorangehenden Ansprüche, **dadurch gekennzeichnet, dass** zwischen der Spindelmutter (57) oder der Gewindespindel (56) und der Stelleinheit (3) ein Sollbruchelement (59) angeordnet ist.

12. Lenksäule nach einem der vorangehenden Ansprüche, **dadurch gekennzeichnet, dass** die Lenkspindel (22) mit einem Lenkgetriebe oder einem Feedback-Aktuator gekoppelt ist.

## Claims

1. A motor-adjustable steering column (1) for a motor vehicle, comprising an outer casing (3) which is held by a support unit (4) that is attachable to a vehicle body and in which an actuator unit (2) is received so as to be telescopically adjustable in the longitudinal direction, a steering spindle (22) being coaxially mounted in a casing tube (21) in said actuator unit (2) so as to be rotatable about a longitudinal axis (L), wherein an adjustment drive (5), which has a threaded spindle (56) which is at least in part disposed within the actuator unit (2) and which so as to be drivable in a rotating manner by an electric servomotor (54) engages in a spindle nut (57), is disposed between the outer casing (3) and the actuator unit (2),
wherein the threaded spindle (56) is disposed at a spacing (a) from the longitudinal axis (L), and wherein the actuator unit (2) has an opening (26) that receives the steering spindle (22), and the threaded spindle (56) is disposed in a spindle tunnel (25) that is configured so as to be separate from the opening (26), **characterized in that** the opening (26) and the spindle tunnel (25) are configured in the casing tube (21) of the actuator unit (2).

2. The steering column as claimed in claim 1, **characterized in that** the threaded spindle (56) is supported in the longitudinal direction on the outer casing (3), and the spindle nut (57) is attached in a rotationally fixed manner on the actuator unit (2) so as to be supported in the longitudinal direction.

3. The steering column as claimed in either of the preceding claims, **characterized in that** the threaded spindle (56) is disposed so as to be parallel to the longitudinal axis (L).

4. The steering column as claimed in one of the preceding claims, **characterized in that** the opening (26) and the spindle tunnel (25) are in each case circumferentially closed.

5. The steering column as claimed in one of the preceding claims, **characterized in that** the casing tube (21) is configured as an extruded profile.

6. The steering column as claimed in one of the preceding claims, **characterized in that** the spindle nut (57) is fastened in the spindle tunnel (25).

7. The steering column as claimed in one of the preceding claims, **characterized in that** the outer casing (3) comprises an extruded profile.

8. The steering column as claimed in one of the preceding claims, **characterized in that** at least one sliding or roller-bearing mounted linear guide (8) is configured between the outer casing (3) and the actuator unit (2).

9. The steering column as claimed in one of the preceding claims, **characterized in that** an energy absorbing installation (7) is disposed between the outer casing (3) and the actuator unit (2).

10. The steering column as claimed in claim 9, **characterized in that** the energy absorbing installation (7) has an energy absorbing element (71) which is disposed directly or indirectly between the spindle nut (57) or the threaded spindle (56) and the actuator unit (2).

11. The steering column as claimed in one of the preceding claims, **characterized in that** a predetermined breaking element (59) is disposed between the spindle nut (57) or the threaded spindle (56) and the actuator unit (2).

12. The steering column as claimed in one of the preceding claims, **characterized in that** the steering spindle (22) is coupled to a steering gear or a feedback actuator.

## Revendications

1. Colonne de direction à réglage motorisé (1) pour un véhicule automobile, comprenant une enveloppe extérieure (3), qui est maintenue par une unité de support (4) pouvant être installée sur une carrosserie de véhicule, et dans laquelle une unité de réglage (2) est reçue de façon à pouvoir être réglée de manière télescopique dans la direction longitudinale et dans laquelle un arbre de direction (22) est monté rotatif autour d'un axe longitudinal (L) coaxialement dans un tube d'enveloppe (21), dans laquelle, entre l'enveloppe extérieure (3) et l'unité de réglage (2), est disposé un entraînement ajustable (5) qui présente une broche filetée (56) disposée au moins partiellement à l'intérieur de l'unité de réglage (2) et qui vient en prise dans un écrou de broche (57) en pouvant être entraînée en rotation par un servomoteur électrique (54), la broche filetée (56) étant disposée à une distance (a) de l'axe longitudinal (L), et l'unité de réglage (2) présentant une ouverture (26) recevant l'arbre de direction (22), et la broche filetée (56) étant disposée dans un passage de broche (25) réalisé séparément de l'ouverture (26), **caractérisée en ce que** l'ouverture (26) et le passage de broche (25) sont réalisés dans le tube d'enveloppe (21) de l'unité de réglage (2).

2. Colonne de direction selon la revendication 1, **caractérisée en ce que** la broche filetée (56) prend appui sur l'enveloppe extérieure (3) dans la direction longitudinale, et l'écrou de broche (57) est installé sur l'unité de réglage (2) de manière verrouillée en rotation, en appui dans la direction longitudinale.

3. Colonne de direction selon l'une quelconque des revendications précédentes, **caractérisée en ce que** la broche filetée (56) est disposée en parallèle à l'axe longitudinal (L).

4. Colonne de direction selon l'une quelconque des revendications précédentes, **caractérisée en ce que** l'ouverture (26) et le passage de broche (25) sont respectivement fermés côté circonférence.

5. Colonne de direction selon l'une quelconque des revendications précédentes, **caractérisée en ce que** le tube d'enveloppe (21) est réalisé sous forme de profilé extrudé.

6. Colonne de direction selon l'une quelconque des revendications précédentes, **caractérisée en ce que** l'écrou de broche (57) est fixé dans le passage de broche (25).

7. Colonne de direction selon l'une quelconque des revendications précédentes, **caractérisée en ce que** l'enveloppe extérieure (3) présente un profilé extrudé.

8. Colonne de direction selon l'une quelconque des revendications précédentes, **caractérisée en ce qu'**au moins un guidage linéaire (8) monté sur palier lisse ou à roulements est réalisé entre l'enveloppe extérieure (3) et l'unité de réglage (2).

9. Colonne de direction selon l'une quelconque des revendications précédentes, **caractérisée en ce qu'**un dispositif d'absorption d'énergie (7) est disposé entre l'enveloppe extérieure (3) et l'unité de réglage (2).

10. Colonne de direction selon la revendication 9, **caractérisée en ce que** le dispositif d'absorption d'énergie (7) présente un élément d'absorption d'énergie (71) disposé directement ou indirectement entre l'écrou de broche (57) ou la broche filetée (56) et l'unité de réglage (2).

11. Colonne de direction selon l'une quelconque des revendications précédentes, **caractérisée en ce qu'**un élément destiné à la rupture (59) est disposé entre l'écrou de broche (57) ou la broche filetée (56) et l'unité de réglage (3).

12. Colonne de direction selon l'une quelconque des revendications précédentes, **caractérisée en ce que** l'arbre de direction (22) est couplé avec un mécanisme de direction ou un actionneur à rétroaction.
